# EUROPEAN PATENT APPLICATION

(11) **EP 4 395 448 A1**
(43) Date of publication of application: **03.07.2024**
(21) Application number: 22874751.5
(22) Date of filing: 21.09.2022
(51) Int. Cl.: H04W 76/14, H04W 4/40

(54) **COMMUNICATION METHOD AND COMMUNICATION APPARATUS**

(30) Priority: 30.09.2021 CN 202111166944
(71) Applicant: Huawei Technologies Co., Ltd., Shenzhen, Guangdong 518129 (CN)
(72) Inventor: HE, Qingchun, Shenzhen, Guangdong 518129 (CN); LI, Mingchao, Shenzhen, Guangdong 518129 (CN); YU, Youyang, Shenzhen, Guangdong 518129 (CN); CHENG, Xingqing, Shenzhen, Guangdong 518129 (CN)
(74) Representative: Pfenning, Meinig & Partner mbB
(86) International application number: PCT/CN2022/120338
(87) International publication number: WO 2023/051364

(57) **Abstract**

This application discloses a communication method and a communication apparatus, relates to the field of communication technologies, and is applied for autonomous driving or assisted driving. The method includes: receiving first information from a first node through a first network, where the first information includes PLMN information that is of a second network and that is supported by the first node, a core network connection type that is of the second network and that is supported by the first node, a backhaul type of the first node in the second network, and a service type that is provided by a core network of the second network and that is supported by the first node; and determining, based on the first information, whether to access the second network via the first node, where the first network is a short-range communication network, and the second network is a cellular network or a macro coverage network. The technical solutions provided in this application improve accuracy of selecting a trusted grant node by a terminal node in short-range communication, and also improve a success rate of accessing the terminal node. The method may be applied to the internet of vehicles, for example, vehicle-to-everything V2X, a long term evolution-vehicle LTE-V technology, and vehicle-to-vehicle V2V.

## Description

This application claims priority to Chinese Patent Application No. 202111166944.2, filed with the China National Intellectual Property Administration on September 30, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Short-range communication has advantages such as low power consumption and low costs, but a communication distance is relatively limited. A cellular network may provide macro coverage, and may provide a service for a user under macro coverage, but power consumption and costs are relatively high. Currently, the short-range communication and the cellular network are converged to implement low-cost long-distance transmission of a terminal device.

In a converged architecture of the short-range communication and the cellular network, a grant node in the short-range communication performs authentication and registration in a 5th generation (5th generation, 5G) mobile communication core network of the cellular network. A grant node that is successfully authenticated and registered in the 5G core network is referred to as a trusted grant node. The trusted grant node may support a cellular network service, and may provide an access service for a terminal node covered by the trusted grant node according to an indication of the 5G core network. A terminal node in the short-range communication needs to access the 5G core network via a trusted grant node. However, currently, there is no specific method for selecting a trusted grant node by a terminal node.

Therefore, how the terminal node in the short-range communication selects the trusted grant node becomes an urgent problem to be resolved.

### SUMMARY

This application provides a communication method and a communication apparatus, to improve accuracy of selecting a trusted grant node by a terminal node in short-range communication, and also improve a success rate of accessing a 5G network by the terminal node.

According to a first aspect, this application provides a communication method. The method includes: receiving first information from a first node through a first network, where the first information includes at least one of public land mobile network PLMN information that is of a second network and that is supported by the first node, a core network connection type that is of the second network and that is supported by the first node, a backhaul type of the first node in the second network, and a service type that is provided by a core network of the second network and that is supported by the first node; and determining, based on the first information, whether to access the second network via the first node.

In this method, whether to access the second network via the first node is determined based on the first information. The first information includes at least one of the public land mobile network information that is of the second network and that is supported by the first node, the core network connection type that is of the second network and that is supported by the first node, the backhaul type of the first node in the second network, and the service type that is provided by the core network of the second network and that is supported by the first node. Compared with determining, based on a terminal capability, blind access, and a basic broadcast parameter, whether to access the second network via the first node, accuracy of determining whether to access the second network via the first node is improved, and a success rate of accessing the second network is also improved.

In a possible implementation, the method further includes: receiving second information from the first node. The second information includes at least one of a device type of the first node, scheduling information of the first information, an update indication of the first information, a broadcast type of the first information, a load level of the first node, a priority of the first node, and a communication domain identifier of the first node.

In a possible implementation, the device type of the first node includes that the first node supports access to the second network and that the first node does not support access to the second network. Correspondingly, the method further includes: receiving the first information based on the second information when the device type of the first node is that the first node supports access to the second network.

In this implementation, whether to receive the first information is determined based on the device type that is of the first node and that is in the second information. It is determined to receive the first information when the device type of the first node is that the first node supports access to the second network. The first information is not received when the device type of the first node is that the first node does not support access to the second network. This saves a resource, and improves efficiency of determining whether to access the second network via the first node.

In a possible implementation, the method for determining, based on the first information, whether to access the second network via the first node includes one or more of the following: determining to access the second network via the first node when a mobile communication network indicated by the PLMN information that is of the second network and that is supported by the first node is a mobile communication network supported by a terminal device; determining to access the second network via the first node when the core network connection type that is of the second network and that is supported by the first node is consistent with a core network connection type supported by the terminal device; and determining to access the second network via the first node when the service type that is provided by the core network of the second network and that is supported by the first node includes a service type required by the terminal device.

In this implementation, based on the first information, whether to access the second network via the first node is determined according to one or more of the following methods: determining to access the second network via the first node when the mobile communication network indicated by the PLMN information that is of the second network and that is supported by the first node is the mobile communication network supported by the terminal device; determining to access the second network via the first node when the core network connection type that is of the second network and that is supported by the first node is consistent with the core network connection type supported by the terminal device; and determining to access the second network via the first node when the service type that is provided by the core network of the second network and that is supported by the first node includes the service type required by the terminal device. This improves accuracy of determining whether to access the second network via the first node, and also improves a success rate of accessing the second network.

In a possible implementation, the method further includes: adding the first node to a service list of the terminal device when the terminal device determines to access the second network via the first node. The service list is used to record a trusted grant node for the terminal device to access the second network.

In a possible implementation, the first information further includes preset duration. Correspondingly, the method further includes: starting or restarting a timer when the terminal device adds the first node to the service list, or when the terminal device receives scheduling information for a service or a traffic of the second network, or when the terminal device receives a service or a traffic of the second network, or when the terminal device sends a service or a traffic to the second network; and re-obtaining the first information and/or the second information after duration of the timer exceeds the preset duration.

In this implementation, the timer is started or restarted when the terminal device adds the first node to the service list, or when the terminal device receives the scheduling information for the service or the service of the second network, or when the terminal device receives the service or the service of the second network, or when the terminal device sends the service or the service to the second network. The first information or the second information or both are re-obtained after the duration of the timer exceeds the preset duration. This effectively maintains the first node and ensures a success rate of accessing the second network.

In a possible implementation, the method further includes: deleting, by the terminal device, the first node from the service list when the terminal device is disconnected from the second network or the terminal device does not obtain the service of the second network within the preset duration; and releasing a resource and a quality of service QoS policy that are associated with the second network.

In this implementation, when the terminal device is disconnected from the second network or the terminal device does not obtain the service of the second network within the preset duration, the terminal device deletes the first node from the service list, and releases the resource and the quality of service QoS policy that are provided by the second network. This effectively avoids resource occupation, and also improves a success rate and efficiency of accessing the second network.

In a possible implementation, the method further includes: sending a request message to the first node. The request message is used to request the first information.

In this implementation, the first information may be received only after the request message is sent to the first node, and the request message is used to request the first information, thereby saving a resource.

In a possible implementation, the method further includes: receiving the first information and/or the second information via broadcast or unicast.

In a possible implementation, the first network is a short-range communication network, and the second network is a cellular network or a macro coverage network.

According to a second aspect, this application provides a communication method. The method includes: sending first information to a second node through a first network. The first information includes at least one of public land mobile network PLMN information that is of a second network and that is supported by a first node, a core network connection type that is of the second network and that is supported by the first node, a backhaul type of the first node in the second network, and a service type that is provided by a core network of the second network and that is supported by the first node. The first information is used by the second node to determine whether to access the second network via the first node.

In a possible implementation, the method further includes: sending second information to the second node. The second information includes at least one of a device type of the first node, scheduling information of the first information, an update indication of the first information, a broadcast type of the first information, a load level of the first node, a priority of the first node, and a communication domain identifier of the first node. The second information is used by the second node to determine whether to receive the first information.

In a possible implementation, the method further includes: receiving a request message from the second node. The request message is used to request the first information.

In a possible implementation, the method further includes: sending the first information and/or the second information to the second node via broadcast or unicast.

In a possible implementation, the first network is a short-range communication network, and the second network is a cellular network or a macro coverage network.

According to a third aspect, this application provides a communication apparatus. The apparatus includes: a receiving module, configured to receive first information from a first node through a first network, where the first information includes at least one of public land mobile network PLMN information that is of a second network and that is supported by the first node, a core network connection type that is of the second network and that is supported by the first node, a backhaul type of the first node in the second network, and a service type that is provided by a core network of the second network and that is supported by the first node; and a determining module, configured to determine, based on the first information, whether to access the second network via the first node.

In a possible implementation, the receiving module is further configured to: receive second information from the first node. The second information includes at least one of a device type of the first node, scheduling information of the first information, an update indication of the first information, a broadcast type of the first information, a load level of the first node, a priority of the first node, and a communication domain identifier of the first node.

In a possible implementation, the device type of the first node includes that the first node supports access to the second network and that the first node does not support access to the second network. Correspondingly, the receiving module is specifically configured to: receive the first information based on the second information when the device type of the first node is that the first node supports access to the second network.

In a possible implementation, the determining module is specifically configured to: determine to access the second network via the first node when a mobile communication network indicated by the PLMN information that is of the second network and that is supported by the first node is a mobile communication network supported by a terminal device; determine to access the second network via the first node when the core network connection type that is of the second network and that is supported by the first node is consistent with a core network connection type supported by the terminal device; and determine to access the second network via the first node when the service type that is provided by the core network of the second network and that is supported by the first node includes a service type required by the terminal device.

In a possible implementation, the apparatus further includes a maintenance module. The maintenance module is configured to: add the first node to a service list of the terminal device when the terminal device determines to access the second network via the first node. The service list is used to record a trusted grant node for the terminal device to access the second network.

In a possible implementation, the first information further includes preset duration. Correspondingly, the maintenance module is further configured to: start or restart a timer when the terminal device adds the first node to the service list, or when the terminal device receives scheduling information for a service or a traffic of the second network, or when the terminal device receives a service or a traffic of the second network, or when the terminal device sends a service or a traffic to the second network; and re-obtain the first information and/or the second information after duration of the timer exceeds the preset duration.

In a possible implementation, the maintenance module is further configured to: delete, by the terminal device, the first node from the service list when the terminal device is disconnected from the second network or the terminal device does not obtain the service of the second network within the preset duration; and release a resource and a quality of service QoS policy that are associated with the second network.

In a possible implementation, the apparatus further includes a sending module. The sending module is configured to: send a request message to the first node. The request message is used to request the first information.

In a possible implementation, the receiving module is specifically configured to: receive the first information and/or the second information via broadcast or unicast.

In a possible implementation, the first network is a short-range communication network, and the second network is a cellular network or a macro coverage network.

According to a fourth aspect, this application provides a communication apparatus. The apparatus includes: a sending module, configured to send first information to a second node through a first network. The first information includes at least one of public land mobile network PLMN information that is of a second network and that is supported by a first node, a core network connection type that is of the second network and that is supported by the first node, a backhaul type of the first node in the second network, and a service type that is provided by a core network of the second network and that is supported by the first node. The first information is used by the second node to determine whether to access the second network via the first node.

In a possible implementation, the sending module is further configured to: send second information to the second node. The second information includes at least one of a device type of the first node, scheduling information of the first information, an update indication of the first information, a broadcast type of the first information, a load level of the first node, a priority of the first node, and a communication domain identifier of the first node. The second information is used by the second node to determine whether to receive the first information.

In a possible implementation, the apparatus further includes a receiving module. The receiving module is configured to: receive a request message from the second node. The request message is used to request the first information.

In a possible implementation, the sending module is specifically configured to: send the first information and/or the second information to the second node via broadcast or unicast.

In a possible implementation, the first network is a short-range communication network, and the second network is a cellular network or a macro coverage network.

According to a fifth aspect, this application provides a communication apparatus. The apparatus may include a processor coupled to a memory. The memory is configured to store program code. The processor is configured to execute the program code in the memory, to implement the method according to any one of the first aspect or the second aspect or any implementation of the first aspect or the second aspect.

Optionally, the apparatus may further include the memory.

According to a sixth aspect, this application provides a chip, including at least one processor and a communication interface. The communication interface and the at least one processor are interconnected by using a line. The at least one processor is configured to run a computer program or instructions, to perform the method according to any one of the first aspect or the second aspect or any possible implementation of the first aspect or the second aspect.

According to a seventh aspect, this application provides a computer-readable medium. The computer-readable medium stores program code to be executed by a device. The program code includes the method according to any one of the first aspect or the second aspect or any possible implementation of the first aspect or the second aspect.

According to an eighth aspect, this application provides a computer program product including instructions. When the computer program product is run on a computer, the computer is enabled to perform the method according to any one of the first aspect or the second aspect or any possible implementation of the first aspect or the second aspect.

According to a ninth aspect, this application provides a computing device, including at least one processor and a communication interface. The communication interface and the at least one processor are interconnected by using a line. The communication interface communicates with a target system. The at least one processor is configured to run a computer program or instructions, to perform the method according to any one of the first aspect or the second aspect or any possible implementation of the first aspect or the second aspect.

According to a tenth aspect, this application provides a computing system, including at least one processor and a communication interface. The communication interface and the at least one processor are interconnected by using a line. The communication interface communicates with a target system. The at least one processor is configured to run a computer program or instructions, to perform the method according to any one of the first aspect or the second aspect or any possible implementation of the first aspect or the second aspect.

### BRIEF DESCRIPTION OF DRAWINGS

FIG. 1 is a schematic diagram of a system architecture according to an embodiment of this application;
FIG. 2 is a schematic diagram of a short-range communication protocol stack architecture according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to another embodiment of this application;
FIG. 6 is a schematic flowchart of a communication method according to still another embodiment of this application;
FIG. 7 is a schematic flowchart of a communication method according to still another embodiment of this application;
FIG. 8 is a schematic flowchart of a communication method according to still another embodiment of this application;
FIG. 9 is a schematic flowchart of a communication method according to still another embodiment of this application;
FIG. 10 is a schematic diagram of a structure of a communication apparatus according to an embodiment of this application;
FIG. 11 is a schematic diagram of a structure of a communication apparatus according to another embodiment of this application; and
FIG. 12 is a schematic diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all the embodiments of this application. All other embodiments obtained by a person of ordinary skill in the art based on embodiments of this application without creative efforts shall fall within the protection scope of this application.

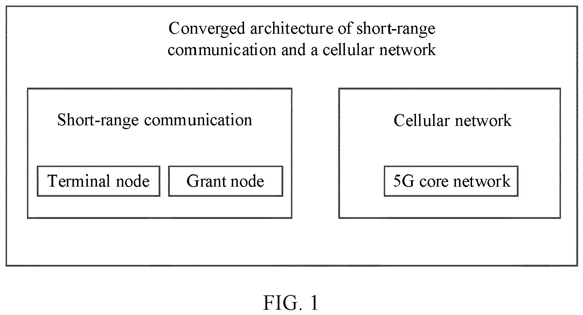

FIG. 1 is a schematic diagram of a system architecture according to an embodiment of this application. As shown in FIG. 1, in a converged architecture of short-range communication and a cellular network, a 5G core network in the cellular network may allocate a cellular network resource on demand based on a registration and session request of a grant node (G node, grant node) in the short-range communication, to provide a cellular network service. In other words, the 5G core network may provide a quality of service (quality of service, QoS) policy for an identified G node on demand. The G node or a terminal node (T node, terminal node) in the short-range communication performs, based on the QoS policy, end-to-end service interaction between a short-range communication network and the cellular network.

As an example, the G node first performs authentication and registration in the 5G core network. The G node that is successfully registered is referred to as a trusted G node, supports a 5G convergence service, and may provide an access layer service, such as connection management, resource allocation, or information security, for the T node covered by the G node. After the G node is registered with the 5G core network, the following two types of services may be provided: a 5G convergence service and a non-5G convergence service. T nodes covered by the G node include two types. One type is a T node that needs or supports the 5G convergence service, and the other type is a T node that does not need or does not support the 5G convergence service. The T node that needs or supports the 5G convergence service may access the 5G core network via the trusted G node, and use a service provided by the 5G network. Therefore, the T node needs to select a trusted G node, and access the 5G core network via the trusted G node.

For the T node to discover the trusted G node, the trusted G node may send 5G convergence service information to the T node in a unicast or broadcast manner, to notify the T node of related information of the 5G core network and information of the G node. The T node determines, based on the 5G convergence service information sent by the G node, whether to access the 5G core network via the G node. After determining to access the 5G core network via the G node, the T node accesses the 5G network via the trusted G node, and effectively maintains the trusted G node.

The T node in this application may be a device having a wireless transceiver function, and may be deployed on land, including an indoor or outdoor, handheld, or on-board deployment; or may be deployed on a water surface (for example, a ship), or may be deployed in the air (for example, an airplane, a balloon, or a satellite); or may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

It needs to be noted that FIG. 1 is only an example of a system architecture in this application, and quantities of devices, components, and modules shown in the figure and location relationships between the devices, components, and modules do not constitute any limitation.

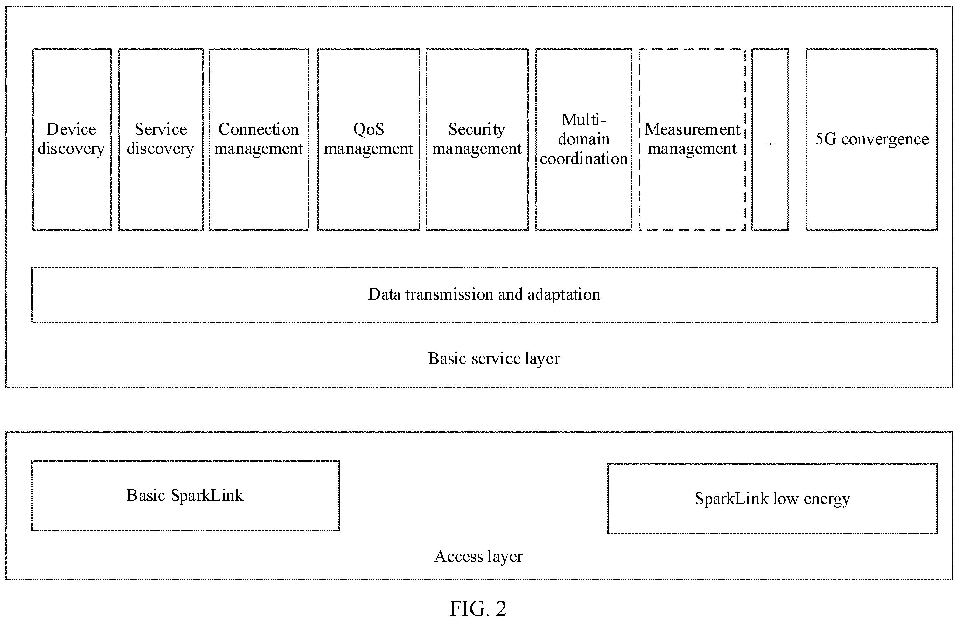

FIG. 2 is a schematic diagram of a short-range communication protocol stack architecture according to an embodiment of this application. The short-range communication protocol stack architecture shown in FIG. 2 takes a SparkLink system protocol stack architecture as an example. The SparkLink system protocol stack architecture is an end-to-end hierarchical management architecture converged with a 5G cellular network, and provides a control-plane protocol stack and a data protocol stack that are converged with the 5G cellular network.

As shown in FIG. 2, the short-range communication protocol stack architecture includes an access layer and a basic service layer. The access layer is used for access control of a radio signal, and includes basic SparkLink (sparklink-basic) and SparkLink low energy (sparklink-lowenergy). The basic service layer includes the following modules on a control plane: device discovery, service discovery, connection management, QoS management, security management, multi-domain coordination, measurement management, 5G convergence, data transmission and adaptation, and the like. Each module performs a corresponding function.

In a SparkLink system constructed based on the SparkLink system protocol stack architecture, nodes in the system are grouped into a G node and a T node. In a specific application scenario, a single G node manages a specific quantity of T nodes, and the G node is connected to these T nodes to jointly complete a specific communication function. The single G node and the T nodes managed by the G node jointly form a communication domain. The communication domain may be understood as a physical coverage area that is formed by using the G node as a center. A size of the coverage area is determined by a sending power of the G node, a frequency used by the G node, and other spatial information. In some scenarios, there may be a plurality of communication domains. For example, in a smart vehicle environment, a mobile phone may also be used as the G node to connect to a wearable device. In this case, the mobile phone and the wearable device form another communication domain. In a smart home scenario, a television and a mounted audio device form a communication domain, a mobile phone and a headset form another communication domain. The two communication domains may be distinguished by an advanced/general communication domain, and the advanced communication domain performs resource coordination to achieve coexistence between the plurality of domains.

The 5G convergence module at the basic service layer is responsible for specific protocol implementation of a 5G convergence function. When a core network delivers a service, the 5G convergence module invokes a plurality of basic service modules at the basic service layer, for example, the device discovery module and the connection management module on the control plane, and a synchronous transmission module and a connection and data adaptation module on a user plane.

The G node in short-range communication may convert short-range communication signaling/data and 5G cellular communication signaling/data via the 5G convergence module, and has a function of forwarding/distributing/summarizing control signaling or data of a 5G convergence service (short range) and a 5G convergence service (cellular). Correspondingly, the T node parses a message in the 5G convergence module, and maintains validity of the G node in 5G convergence communication.

In addition, if the G node has a 5G convergence service capability, the G node directly participates in service interaction between the T node and the core network. If the G node does not have a 5G convergence service capability, the G node only performs transparent data transmission, and the transparent transmission function is performed at the basic service layer.

It needs to be noted that the short-range communication protocol stack architecture shown in FIG. 2 is only an example. The short-range communication protocol stack architecture is not limited to the SparkLink system protocol architecture. This is not limited in this application.

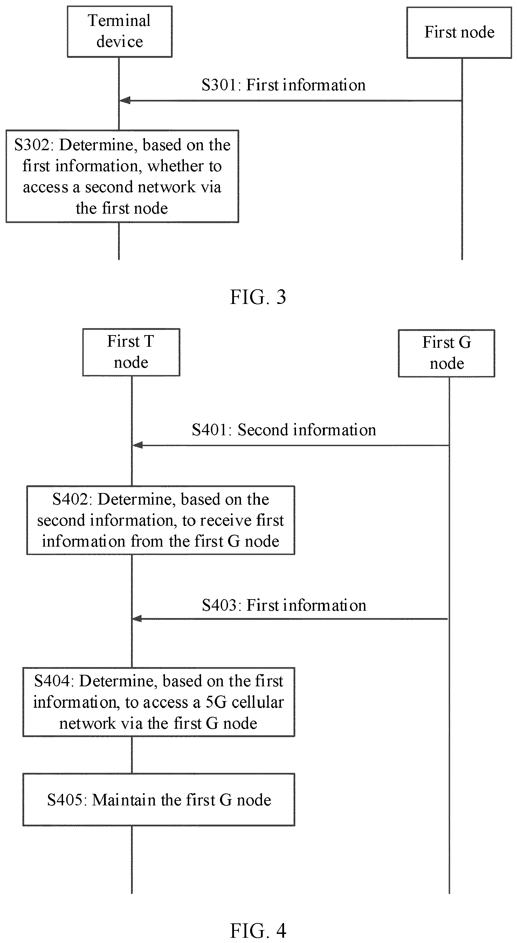

FIG. 3 is a schematic flowchart of a communication method according to an embodiment of this application. As shown in FIG. 3, the method includes at least S301 and 5302.

S301: Receive first information from a first node through a first network, where the first information includes at least one of public land mobile network information that is of a second network and that is supported by the first node, a core network connection type that is of the second network and that is supported by the first node, a backhaul type of the first node in the second network, and a service type that is provided by a core network of the second network and that is supported by the first node.

In a possible implementation, the first network is a short-range communication network, and the second network is a cellular network or a macro coverage network. For example, the cellular network may be a 5G network, and the first node is a G node in the first network.

For example, in the first information, the public land mobile network (public land mobile network, PLMN) information that is of the second network and that is supported by the first node, the core network connection type that is of the second network and that is supported by the first node, the backhaul type of the first node in the second network, and the service type that is provided by the core network of the second network and that is supported by the first node include the following content.

The PLMN is an important part of an international mobile subscriber identity (international mobile subscriber identity, IMSI), and includes two parts: mobile country code (mobile country code, MCC) and mobile network code (mobile network code, MNC). The PLMN information that is of the second network and that is supported by the first node indicates a mobile communication network that is of the second network and that is supported by the first node.

The core network connection type that is of the second network and that is supported by the first node includes but is not limited to a 5G connection with a non-access stratum (non-access stratum, NAS) and a 5G connection without a NAS. The core network connection type that is of the second network and that is supported by the first node indicates whether the first node supports access without a NAS. When the core network connection type that is of the second network and that is supported by the first node is a 5G connection with a NAS, it indicates that only a terminal device that supports NAS signaling transmission may register with the second network via the first node. When the core network connection type that is of the second network and that is supported by the first node is a 5G connection without a NAS, it indicates that a terminal device that does not support NAS signaling transmission may also register with the second network via the first node.

The backhaul type of the first node in the second network indicates that the first node supports a wired connection or a wireless connection with a gateway node in the first network or with the second network. The wired connection may further include an ideal wired backhaul and a non-ideal wired backhaul. The ideal wired backhaul and the non-ideal wired backhaul are defined by using an existing 3rd generation partnership project (3rd generation partnership project, 3GPP). For example, when a transmission delay is less than a preset value, it is considered that the ideal wired backhaul is used; and when the transmission delay is not less than the preset value, it is considered that the non-ideal wired backhaul is used. The terminal device may estimate, based on the backhaul type of the first node in the second network, whether the transmission delay meets a requirement, to determine whether to access the second network via the first node.

The service type that is provided by the core network of the second network and that is supported by the first node indicates a service type that is provided by a core network in the second network and that is supported by the first node, and includes but is not limited to QoS management, link status management, node status management, and the like. The QoS management indicates that the core network may adjust QoS of a service based on a link status detection reporting result of the terminal device, and provide QoS policy control. The link status management indicates that the core network may configure a link status detection policy of the terminal device, and the terminal device measures a link and reports a measurement result based on the detection policy. The node status management indicates that the core network may send a node parameter update indication to the terminal device based on node status information (such as node power and version information) reported by the terminal device, to manage a node status.

In a possible implementation, second information from the first node is received, and whether to receive the first information is determined based on the second information.

The second information includes at least one of a device type of the first node, scheduling information of the first information, an update indication of the first information, a broadcast type of the first information, a load level of the first node, a priority of the first node, and a communication domain identifier of the first node.

For example, in the second information, the device type of the first node, the scheduling information of the first information, the update indication of the first information, the broadcast type of the first information, the load level of the first node, the priority of the first node, and the communication domain identifier of the first node include the following content.

The device type of the first node indicates whether the first node supports a 5G convergence function, and the device type of the first node includes that the first node supports access to the second network and that the first node does not support access to the second network.

The scheduling information of the first information includes but is not limited to a resource indication for sending the first information, for example, a moment, a used frequency, a sending period, and a receiving window length.

The update indication of the first information indicates whether content of the first information changes.

The broadcast type of the first information indicates whether the first information is periodically broadcast or is obtained on demand.

The load level of the first node indicates a quantity or a service volume of terminal devices currently served by the first node. The terminal device may use the load level of the first node as a reference. If the load level of the first node is heavy, the terminal device does not consider the first node as an optimal node, or decreases a priority of selecting the first node.

The priority of the first node indicates a priority of the first node in a communication domain of the first node relative to a G node in another communication domain.

For example, the priority of the first node in the communication domain of the first node is higher than a priority of a G node in another communication domain, indicating that the first node may provide more abundant management, for example, allocate and coordinate a resource to a G node under coverage of another communication domain, to avoid interference between a plurality of communication domains.

The communication domain identifier of the first node indicates a media access control address (media access control address, MAC) of the first node.

In a possible implementation, the terminal device may determine a 5G convergence capability of the first node based on the second information, to determine whether to continue to receive the first information. The second information provides a universal service, and may be used by the first node to notify the terminal device that a specific service changes, to trigger the terminal device to obtain an updated service broadcast. For example, the specific service may be a 5G convergence service.

For example, it is determined to receive the first information when the device type that is of the first node and that is in the second information is that the first node supports access to the second network.

For example, it is determined to receive the first information when the update indication that is of the first information and that is in the second information is that the content of the first information changes.

As an example, after determining, based on the second information, to receive the first information, the terminal device sends a request message to the first node. The request message is used to request the first information. After receiving the request message, the first node sends the first information to the terminal device.

The terminal device may receive the first information and/or the second information in a broadcast or unicast manner.

As an example, when receiving the first information and/or the second information in the broadcast manner, the terminal device performs information transmission through a common channel.

For example, the common channel may be a broadcast channel.

As another example, when receiving the first information and/or the second information in the unicast manner, the terminal device performs information transmission through a dedicated channel.

For example, the dedicated channel may be a 5G convergence service transmission channel, and the 5G convergence service transmission channel includes a logical channel and a transmission channel. The 5G convergence service transmission channel may be a default 5G convergence service transmission channel, or may be a 5G convergence service transmission channel newly established between the terminal device and the first node.

In another possible implementation, the terminal device receives a first message from the first node. The first message includes the first information and the second information. The terminal device determines, based on the first message, whether to access the second network via the first node.

S302: Determine, based on the first information, whether to access the second network via the first node.

In a possible implementation, the method for determining, by the terminal device based on the first information, whether to access the second network via the first node includes one or more of the following.

It is determined to access the second network via the first node when a mobile communication network indicated by the PLMN information that is of the second network and that is supported by the first node is a mobile communication network supported by the terminal device.

It is determined to access the second network via the first node when the core network connection type that is of the second network and that is supported by the first node is consistent with a core network connection type supported by the terminal device.

The core network connection type supported by the terminal device includes but is not limited to a 5G connection with a NAS and a 5G connection without a NAS.

For example, when both the core network connection type that is of the second network and that is supported by the first node and the core network connection type supported by the terminal device are a 5G connection without a NAS, the terminal device determines to access the second network via the first node. When the core network connection type that is of the second network and that is supported by the first node is a 5G connection with a NAS and the core network connection type supported by the terminal device is a 5G connection without a NAS, the terminal device determines to access the second network not via the first node.

It is determined to access the second network via the first node when the service type that is provided by the core network of the second network and that is supported by the first node includes a service type required by the terminal device.

After the terminal device determines to access the second network via the first node, the terminal device maintains the first node.

In a possible implementation, the method for maintaining the first node by the terminal device includes one or more of the following.

The terminal device adds the first node to a service list of the terminal device when determining to access the second network via the first node. The service list is used to record a trusted grant node for the terminal device to access the second network.

The first information received by the terminal device may further include preset duration. A timer is started or restarted when the terminal device adds the first node to the service list, or when the terminal device receives scheduling information for a service or a traffic of the second network, or when the terminal device receives a service or a traffic of the second network, or when the terminal device sends a service or a traffic to the second network. The first information or the second information or both are re-obtained after duration of the timer exceeds the preset duration in the first information.

The timer is enabled and configurable. The terminal device may start or restart the timer based on the foregoing condition only when the timer is in an enabled state.

When the terminal device is disconnected from the second network or the terminal device does not obtain the service of the second network within the preset duration in the first information, the terminal device deletes the first node from the service list, and the terminal device releases a resource and a QoS policy that are associated with the second network. Communication between a first G node and a first T node is based on non-5G convergence requirement transmission. The resource associated with the second network represents a resource used to process a 5G convergence service.

A correspondence between a trusted G node and a 5G convergence key or password is maintained.

In the technical solutions provided in this application, the terminal device determines, based on the first information received from the first node, whether to access the second network via the first node, thereby improving accuracy of determining, by the terminal device, whether to access the second network via the first node, and also improving a success rate of accessing the second network by the terminal device.

FIG. 4 is a schematic flowchart of a communication method according to an embodiment of this application. As shown in FIG. 4, the method includes at least S401 to S405.

S401: A first T node receives second information from a first G node, where the second information includes at least one of a device type of the first G node, scheduling information of first information, an update indication of the first information, a broadcast type of the first information, a load level of the first G node, a priority of the first G node, and a communication domain identifier of the first G node; and the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node.

For example, in the first information, the PLMN information that is of the 5G cellular network and that is supported by the first G node, the core network connection type that is of the 5G cellular network and that is supported by the first G node, the backhaul type of the first G node in the 5G cellular network, and the service type that is provided by the core network of the 5G cellular network and that is supported by the first G node include the following content.

The PLMN information that is the 5G cellular network and that is supported by the first G node indicates a mobile communication network that is of the 5G cellular network and that is supported by the first G node.

The core network connection type that is of the 5G cellular network and that is supported by the first G node includes but is not limited to a 5G connection with a NAS and a 5G connection without a NAS. The core network connection type that is of the 5G cellular network and that is supported by the first G node indicates whether the first G node supports access to the 5G cellular network without a NAS. When the core network connection type supported by the first G node is a 5G connection with a NAS, it indicates that only the first T node that supports NAS signaling transmission may be registered with a 5G core network. When the core network connection type supported by the first G node is a 5G connection without a NAS, it indicates that the first T node that does not support NAS signaling transmission may also be registered with the 5G core network.

The backhaul type of the first G node in the 5G cellular network indicates that the first G node supports a wired connection or a wireless connection with a gateway node in a short-range communication network or with the 5G core network. The wired connection includes an ideal wired backhaul and a non-ideal wired backhaul. The ideal wired backhaul and the non-ideal wired backhaul are defined by using an existing 3GPP. For example, when a transmission delay is less than a preset value, it is considered that the ideal wired backhaul is used; and when the transmission delay is not less than the preset value, it is considered that the non-ideal wired backhaul is used. The first T node may estimate, based on the backhaul type of the first G node in the 5G cellular network, whether the transmission delay meets a requirement, to determine whether to access the 5G cellular network via the first G node.

The service type that is provided by the core network of the 5G cellular network and that is supported by the first G node indicates a service type that is provided by a core network and that is supported by the first G node, and includes but is not limited to QoS management, link status management, node status management, and the like. The QoS management indicates that the core network may adjust QoS of a service based on a link status detection reporting result of the first T node, and provide QoS policy control. The link status management indicates that the core network may configure a link status detection policy of the first T node, and the first T node measures a link and reports a measurement result based on the detection policy. The node status management indicates that the core network may send a node parameter update indication to the first T node based on node status information (such as node power and version information) reported by the first T node, to manage a node status.

For example, in the second information, the device type of the first G node, the scheduling information of the first information, the update indication of the first information, the broadcast type of the first information, the load level of the first G node, the priority of the first G node, and the communication domain identifier of the first G node include the following content.

The device type of the first G node indicates whether the first G node supports a 5G convergence function. The device type of the first G node includes that the first G node supports access to the 5G cellular network and that the first G node does not support access to the 5G cellular network.

The scheduling information of the first information includes but is not limited to a moment, a used frequency, a sending period, a receiving window length, and the like for sending the first information.

The update indication of the first information indicates whether content of the first information changes.

The broadcast type of the first information indicates whether the first information is periodically broadcast or is obtained on demand.

The load level of the first G node indicates a quantity or a service volume of T nodes currently served by the first G node. The first T node may use the load level of the first G node as a reference. If the load level of the first G node is heavy, the first T node does not consider the first G node as an optimal node, or decreases a priority of selecting the first G node.

The priority of the first G node indicates a priority of the first G node in a communication domain of the first G node relative to a G node in another communication domain.

The communication domain identifier of the first G node indicates a MAC address of the first G node.

S402: The first T node determines, based on the second information, to receive the first information from the first G node.

In a possible implementation, the first T node may determine a 5G convergence capability of the first G node based on the second information, to determine whether to continue to receive the first information. The second information provides a universal service, and may be used by the first G node to notify the first T node that a specific service changes, to trigger the first T node to obtain an updated service broadcast. For example, the specific service may be a 5G convergence service.

For example, it is determined to receive the first information when the device type that is of the first G node and that is in the second information is that the first G node supports access to the 5G cellular network.

For example, it is determined to receive the first information when the update indication that is of the first information and that is in the second information is that the content of the first information changes.

S403: The first T node receives the first information from the first G node.

S404: The first T node determines, based on the first information, to access the 5G cellular network via the first G node.

In a possible implementation, the method for determining, by the first T node based on the first information, whether to access the 5G cellular network via the first G node includes one or more of the following.

It is determined to access the 5G cellular network via the first G node when a mobile communication network indicated by the PLMN information that is of the 5G cellular network and that is supported by the first G node is a mobile communication network supported by the first T node.

It is determined to access the 5G cellular network via the first G node when the core network connection type that is of the 5G cellular network and that is supported by the first G node is consistent with a core network connection type supported by the first T node.

The core network connection type supported by the first T node includes but is not limited to a 5G connection with a NAS and a 5G connection without a NAS.

It is determined to access the 5G cellular network via the first G node when the service type that is provided by the core network of the 5G cellular network and that is supported by the first G node includes a service type required by the first T node.

S405: The first T node maintains the first G node.

In a possible implementation, the method for maintaining the first G node by the first T node includes one or more of the following.

The first T node adds the first G node to a service list of the first T node when determining to access the 5G cellular network via the first G node. The service list is used to record a trusted grant node for the first T node to access the 5G cellular network.

The first information received by the first T node may further include preset duration. The timer is started or restarted when the first T node adds the first G node to the service list, or when the first T node receives scheduling information for a service or a traffic of the 5G cellular network, or when the first T node receives a service or a traffic of the 5G cellular network, or when the first T node sends a service or a traffic to the 5G cellular network. The first information or the second information or both are re-obtained after duration of the timer exceeds the preset duration in the first information.

The timer is enabled and configurable. The first T node may start or restart the timer based on the foregoing condition only when the timer is in an enabled state.

When the first T node is disconnected from the 5G cellular network or the first T node does not obtain the service of the 5G cellular network within the preset duration in the first information, the first T node deletes the first G node from the service list, and the first T node releases a resource and a QoS policy that are associated with a 5G network. Communication between the first G node and the first T node is based on non-5G convergence requirement transmission. The resource associated with the 5G network represents a resource used to process a 5G convergence service.

A correspondence between the first G node and a 5G convergence key or password is maintained.

In the technical solution provided in this application, the first T node receives the second information from the first G node in a broadcast manner, determines, based on the second information, whether to receive the first information of the first G node, and receives the first information of the first G node only after determining to receive the first information of the first G node, thereby saving a resource. In addition, after determining to access the 5G cellular network via the first G node, the first T node maintains the first G node, thereby ensuring a success rate of accessing the 5G cellular network by the first T node via the first G node.

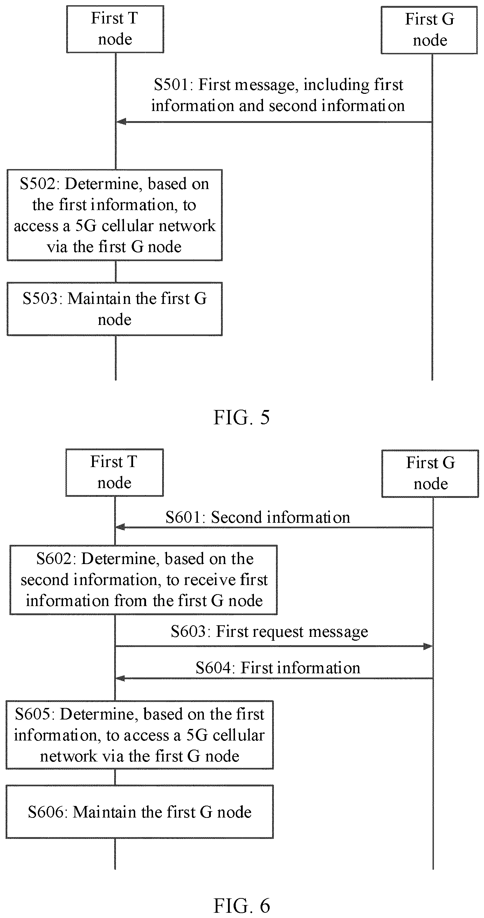

FIG. 5 is a schematic flowchart of a communication method according to another embodiment of this application. As shown in FIG. 5, the method includes at least S501 to S503.

S501: A first T node receives a first message from a first G node, where the first message includes first information and second information; the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node; and the second information includes at least one of a device type of the first G node, scheduling information of the first information, an update indication of the first information, a broadcast type of the first information, a load level of the first G node, a priority of the first G node, and a communication domain identifier of the first G node.

S502: The first T node determines, based on the first information, to access the 5G cellular network via the first G node.

S503: The first T node maintains the first G node.

It needs to be noted that, for content of the first information and the second information in S501, refer to the content of the first information and the second information in S401. For S502 and S503, refer to S404 and S405. Details are not described herein again.

In the technical solution provided in this application, the first T node: receives the first message from the first G node in a broadcast manner, where the first message includes the first information and the second information; and determines, based on the first information, whether to access the 5G cellular network via the first G node, thereby saving a resource. In addition, after determining to access the 5G cellular network via the first G node, the first T node maintains the first G node, thereby ensuring a success rate of accessing the 5G cellular network by the first T node via the first G node.

FIG. 6 is a schematic flowchart of a communication method according to still another embodiment of this application. As shown in FIG. 6, the method includes at least S601 to S606.

S601: A first T node receives second information from a first G node, where the second information includes at least one of a device type of the first G node, scheduling information of first information, an update indication of the first information, a broadcast type of the first information, a load level of the first G node, a priority of the first G node, and a communication domain identifier of the first G node; and the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node.

S602: The first T node determines, based on the second information, to receive the first information from the first G node.

It needs to be noted that, for S601 and S602, refer to S401 and S402. Details are not described herein again.

S603: The first T node sends a first request message to the first G node, where the first request message is used to request the first information.

In a possible implementation, when the first T node needs to access a 5G core network and the broadcast type that is of the first information and that is in the received second information is obtained on demand, the first T node sends the first request message to the first G node. The first request message is used to request the first information.

For example, the second information may further include a request access resource of the first information, and the first T node sends the first request message based on the request access resource of the first information.

The request access resource of the first information is optional. When the request access resource of the first information is not configured in the second information, the first T node initiates a request by using a default or contention resource.

After receiving the first request message of the first T node, the first G node broadcasts the first information in a next available broadcast period. How many broadcast periods for sending the first information are implemented by the first G node.

S604: The first T node receives the first information from the first G node.

S605: The first T node determines, based on the first information, to access the 5G cellular network via the first G node.

S606: The first T node maintains the first G node.

It needs to be noted that, for S604 to S606, refer to S403 to S405. Details are not described herein again.

In the technical solution provided in this application, after determining, based on the received second information, to receive the first information from the first G node, the first T node requests the first information from the first G node on demand, thereby saving a resource. In addition, after determining to access the 5G cellular network via the first G node, the first T node maintains the first G node, thereby ensuring a success rate of accessing the 5G cellular network by the first T node via the first G node.

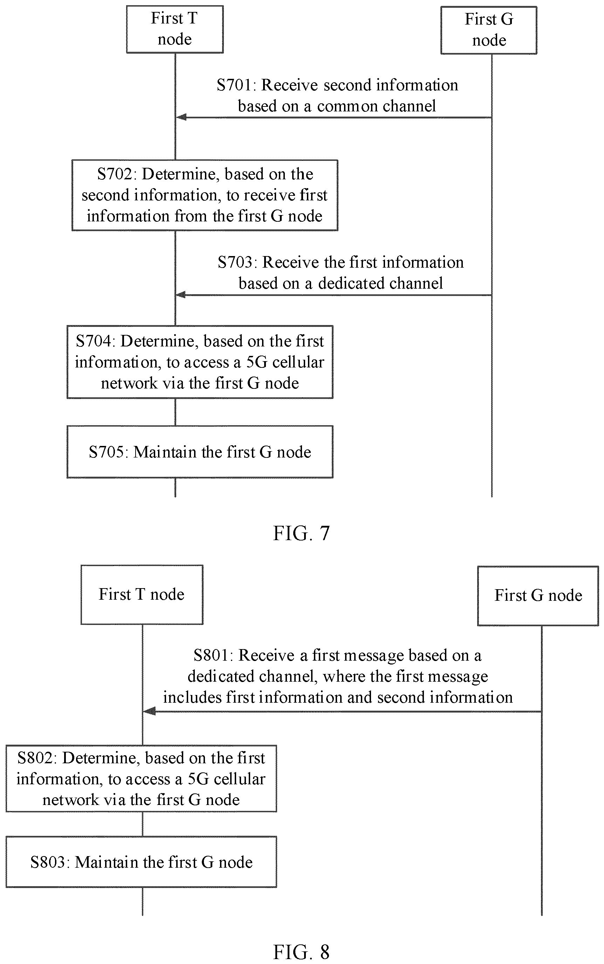

FIG. 7 is a schematic flowchart of a communication method according to still another embodiment of this application. As shown in FIG. 7, the method includes at least S701 to S705.

S701: A first T node receives second information from a first G node based on a common channel, where the second information includes at least one of a device type of the first G node, scheduling information of first information, an update indication of the first information, a broadcast type of the first information, a load level of the first G node, a priority of the first G node, and a communication domain identifier of the first G node; and the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node.

For example, the common channel may be a broadcast channel.

S702: The first T node determines, based on the second information, to receive the first information from the first G node.

It needs to be noted that, for S701 and S702, refer to S401 and S402. Details are not described herein again.

S703: The first T node receives the first information from the first G node based on a dedicated channel.

In a possible implementation, after determining, based on the second information, to receive the first information from the first G node, the first T node establishes an access layer connection with the first G node. The dedicated channel may be a 5G convergence service transmission channel, and the 5G convergence service transmission channel includes a logical channel and a transmission channel.

As an example, the 5G convergence service transmission channel is a default 5G convergence service transmission channel.

As another example, the 5G convergence service transmission channel is a 5G convergence service transmission channel newly established between the first T node and the first G node.

S704: The first T node determines, based on the first information, to access the 5G cellular network via the first G node.

S705: The first T node maintains the first G node.

It needs to be noted that, for S704 and S705, refer to S404 and S405. Details are not described herein again.

In the technical solution provided in this application, the first T node: receives the second information from the first G node in a unicast manner; determines, based on the second information, whether to receive the first information of the first G node; establishes the access layer connection with the first G node only after determining to receive the first information of the first G node; and receives the first information of the first G node, thereby saving a resource. In addition, after determining to access the 5G cellular network via the first G node, the first T node maintains the first G node, thereby ensuring a success rate of accessing the 5G cellular network by the first T node via the first G node.

FIG. 8 is a schematic flowchart of a communication method according to still another embodiment of this application. As shown in FIG. 8, the method includes at least S801 to S803.

S801: A first T node receives, based on a dedicated channel, a first message from a first G node, where the first message includes first information and second information; the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node; and the second information includes at least one of a device type of the first G node, scheduling information of the first information, an update indication of the first information, a broadcast type of the first information, a load level of the first G node, a priority of the first G node, and a communication domain identifier of the first G node.

In a possible implementation, the first T node establishes an access layer connection with the first G node. The dedicated channel may be a 5G convergence service transmission channel, and the 5G convergence service transmission channel includes a logical channel and a transmission channel.

As an example, the 5G convergence service transmission channel is a default 5G convergence service transmission channel.

As another example, the 5G convergence service transmission channel is a 5G convergence service transmission channel newly established between the first T node and the first G node.

It needs to be noted that, for content of the first information and the second information in S801, refer to the content of the first information and the second information in S401. Details are not described herein again.

S802: The first T node determines, based on the first information, to access the 5G cellular network via the first G node.

S803: The first T node maintains the first G node.

It needs to be noted that, for S802 and S803, refer to S404 and S405. Details are not described herein again.

In the technical solution provided in this application, the first T node: receives the first message from the first G node in a unicast manner, where the first message includes the first information and the second information; and determines, based on the first information, whether to access the 5G cellular network via the first G node, thereby saving a resource. In addition, after determining to access the 5G cellular network via the first G node, the first T node maintains the first G node, thereby ensuring a success rate of accessing the 5G cellular network by the first T node via the first G node.

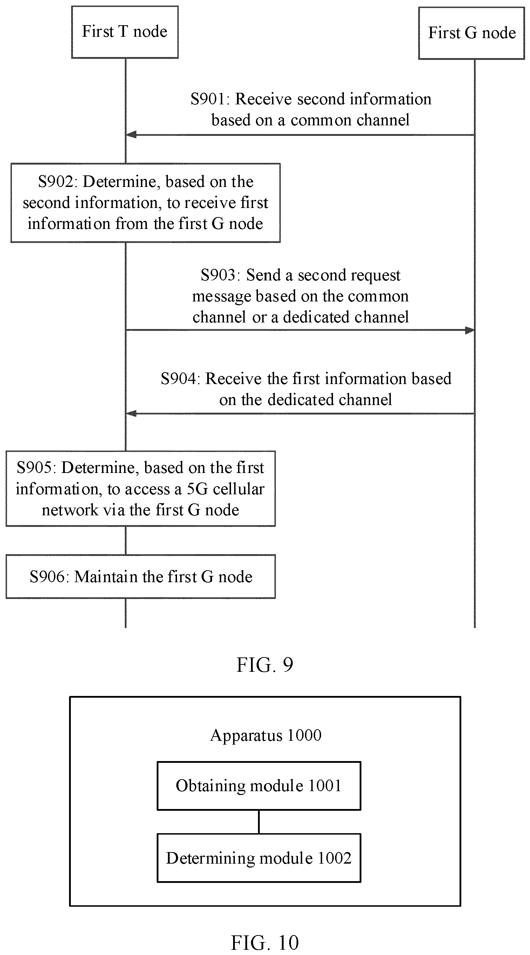

FIG. 9 is a schematic flowchart of a communication method according to still another embodiment of this application. As shown in FIG. 9, the method includes at least S901 to S906.

S901: A first T node receives second information from a first G node based on a common channel, where the second information includes at least one of a device type of the first G node, scheduling information of first information, an update indication of the first information, a broadcast type of the first information, a load level of the first G node, a priority of the first G node, and a communication domain identifier of the first G node; and the first information includes at least one of PLMN information that is of a 5G cellular network and that is supported by the first G node, a core network connection type that is of the 5G cellular network and that is supported by the first G node, a backhaul type of the first G node in the 5G cellular network, and a service type that is provided by a core network of the 5G cellular network and that is supported by the first G node.

For example, the common channel may be a broadcast channel.

It needs to be noted that, for content of the first information and the second information in S901, refer to the content of the first information and the second information in S401. Details are not described herein again.

S902: The first T node determines, based on the second information, to receive the first information from the first G node.

It needs to be noted that, for S902, refer to S402. Details are not described herein again.

S903: The first T node sends a second request message to the first G node based on the common channel or a dedicated channel, where the second request message is used to request the first G node to send the first information to the first T node through dedicated signaling.

In a possible implementation, the first T node determines, based on the received second information, to establish an access layer connection with the first G node. When the first T node needs to access a 5G core network and does not obtain the first information sent by the first G node, the first T node sends the second request message to the first G node, to request the first G node to send the first information through the dedicated signaling.

After receiving the second request message of the first T node, the first G node sends the first information to the first T node by using an available dedicated resource.

For example, the common channel may be a broadcast channel.

For example, the dedicated channel may be a 5G convergence service transmission channel, and the 5G convergence service transmission channel includes a logical channel and a transmission channel. The dedicated signaling may be carried on the 5G convergence service transmission channel.

As an example, the 5G convergence service transmission channel is a default 5G convergence service transmission channel.

As another example, the 5G convergence service transmission channel is a 5G convergence service transmission channel newly established between the first T node and the first G node.

S904: The first T node receives the first information from the first G node based on the dedicated channel.

S905: The first T node determines, based on the first information, to access the 5G cellular network via the first G node.

S906: The first T node maintains the first G node.

It needs to be noted that, for S905 and S906, refer to S404 and S405. Details are not described herein again.

In the technical solution provided in this application, after determining, based on the received second information, to receive the first information from the first G node, the first T node requests the first information from the first G node on demand, thereby saving a resource. In addition, after determining to access the 5G cellular network via the first G node, the first T node maintains the first G node, thereby ensuring a success rate of accessing the 5G cellular network by the first T node via the first G node.

FIG. 10 is a schematic diagram of a structure of a communication apparatus according to an embodiment of this application. As shown in FIG. 10, an apparatus 1000 may include a receiving module 1001 and a determining module 1002. The apparatus 1000 may be configured to implement an operation implemented by the terminal device or the first T node in embodiments shown in any one of FIG. 3 to FIG. 9.

Either of the receiving module and the determining module in this embodiment of this application may be implemented in whole or in part by using software and/or hardware. The part implemented by using software may run on a processor to implement a corresponding function, and the part implemented by using hardware may be a component of the processor.

In an implementation, the apparatus 1000 may be configured to implement the method shown in FIG. 3. For example, the receiving module 1001 is configured to implement S301, and the determining module 1002 is configured to implement S302.

In another implementation, the apparatus 1000 further includes a maintenance module. The apparatus 1000 in this implementation may be configured to implement the method shown in FIG. 4. For example, the receiving module 1001 is configured to implement S401 and S403, the determining module 1002 is configured to implement S402 and S404, and the maintenance module is configured to implement S405.

In still another implementation, the apparatus 1000 further includes a maintenance module. The apparatus 1000 in this implementation may be configured to implement the method shown in FIG. 5. For example, the receiving module 1001 is configured to implement S501, the determining module 1002 is configured to implement S502, and the maintenance module is configured to implement S503.

In still another implementation, the apparatus 1000 further includes a sending module and a maintenance module. The apparatus 1000 in this implementation may be configured to implement the method shown in FIG. 6. For example, the receiving module 1001 is configured to implement S601 and S604, the determining module 1002 is configured to implement S602 and S605, the sending module is configured to implement S603, and the maintenance module is configured to implement S606.

In still another implementation, the apparatus 1000 further includes a maintenance module. The apparatus 1000 in this implementation may be configured to implement the method shown in FIG. 7. For example, the receiving module 1001 is configured to implement S701 and S703, the determining module 1002 is configured to implement S702 and S704, and the maintenance module is configured to implement S705.

In still another implementation, the apparatus 1000 further includes a maintenance module. The apparatus 1000 in this implementation may be configured to implement the method shown in FIG. 8. For example, the receiving module 1001 is configured to implement S801, the determining module 1002 is configured to implement S802, and the maintenance module is configured to implement S803.

In still another implementation, the apparatus 1000 further includes a sending module and a maintenance module. The apparatus 1000 in this implementation may be configured to implement the method shown in FIG. 9. For example, the receiving module 1001 is configured to implement S901 and S904, the determining module 1002 is configured to implement S902 and S905, the sending module is configured to implement S903, and the maintenance module is configured to implement S906.

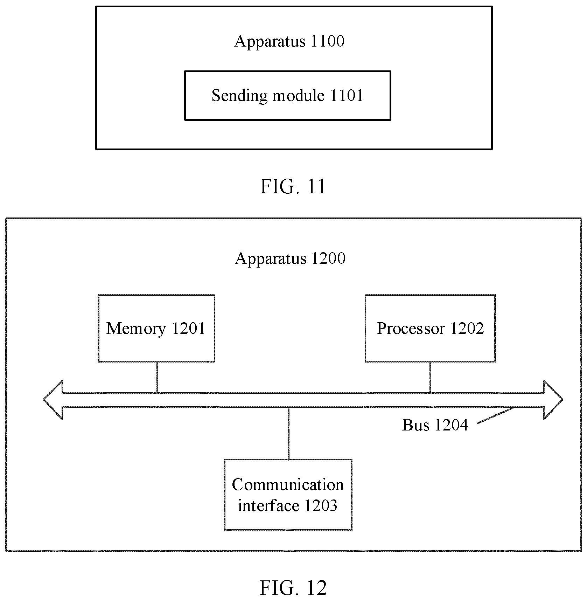

FIG. 11 is a schematic diagram of a structure of a communication apparatus according to another embodiment of this application. As shown in FIG. 11, an apparatus 1100 may include a sending module 1101. The apparatus 1100 may be configured to implement an operation implemented by the first node or the first G node in embodiments shown in any one of FIG. 3 to FIG. 9.

In an implementation, the apparatus 1100 may be configured to implement the method shown in FIG. 3. For example, the sending module 1101 is configured to implement S301.

In another implementation, the apparatus 1100 may be configured to implement the method shown in FIG. 4. For example, the sending module 1101 is configured to implement S401 and 5403.

In still another implementation, the apparatus 1100 may be configured to implement the method shown in FIG. 5. For example, the sending module 1101 is configured to implement S501.

In still another implementation, the apparatus 1100 further includes a receiving module. The apparatus 1100 in this implementation may be configured to implement the method shown in FIG. 6. For example, the sending module 1101 is configured to implement S601 and S604, and the receiving module is configured to implement S603.

In still another implementation, the apparatus 1100 may be configured to implement the method shown in FIG. 7. For example, the sending module 1101 is configured to implement S701 and S703.

In still another implementation, the apparatus 1100 may be configured to implement the method shown in FIG. 8. For example, the sending module 1101 is configured to implement S801.

In still another implementation, the apparatus 1100 further includes a receiving module. The apparatus 1100 in this implementation may be configured to implement the method shown in FIG. 9. For example, the sending module 1101 is configured to implement S901 and S904, and the receiving module is configured to implement S903.

FIG. 12 is a schematic diagram of a structure of a communication apparatus according to an embodiment of this application. An apparatus 1200 shown in FIG. 12 may be configured to perform the method according to any one of the foregoing embodiments.

As shown in FIG. 12, the apparatus 1200 in this embodiment includes a memory 1201, a processor 1202, a communication interface 1203, and a bus 1204. A communication connection between the memory 1201, the processor 1202, and the communication interface 1203 is implemented through the bus 1204.

The memory 1201 may be a read-only memory (read-only memory, ROM), a static storage device, a dynamic storage device, or a random-access memory (random-access memory, RAM). The memory 1201 may store a program. When the program stored in the memory 1201 is executed by the processor 1202, the processor 1202 may be configured to perform the steps of the methods shown in FIG. 3 to FIG. 9.

The processor 1202 may be a general-purpose central processing unit (central processing unit, CPU), a microprocessor, an application-specific integrated circuit (application-specific integrated circuit, ASIC), or one or more integrated circuits, and is configured to execute a related program, to implement the communication methods in method embodiments of this application.

The processor 1202 may alternatively be an integrated circuit chip and has a signal processing capability. In an implementation process, the steps of the methods in embodiments of this application may be completed by using an integrated logic circuit of hardware in the processor 1202 or by using instructions in a form of software.

The processor 1202 may be alternatively a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like.

The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random-access memory, a flash memory, a read-only memory, a programmable read-only memory, an electrically erasable programmable memory, or a register. The storage medium is located in the memory 1201. The processor 1202 reads information in the memory 1201, and completes, in combination with hardware of the processor 1202, functions that need to be performed in the methods in embodiments of this application. For example, the steps/functions in the embodiments shown in FIG. 3 to FIG. 9 may be performed.

The communication interface 1203 may use, but is not limited to, a transceiver apparatus such as a transceiver, to implement communication between the apparatus 1200 and another device or a communication network.

The bus 1204 may include a path for transmitting information between components (for example, the memory 1201, the processor 1202, and the communication interface 1203) of the apparatus 1200.

It should be understood that the apparatus 1200 shown in this embodiment of this application may be an electronic device, or may be a chip configured in an electronic device.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM), and is used as an external cache. Through an example rather than a limitative description, random-access memories (random-access memory, RAM) in many forms may be used, for example, a static random-access memory (static RAM, SRAM), a dynamic random-access memory (DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchlink dynamic random-access memory (synchlink DRAM, SLDRAM), and a direct rambus random-access memory (direct rambus RAM, DR RAM).

All or some of the foregoing embodiments may be implemented by using software, hardware, firmware, or any combination thereof. When software is used for implementation, the foregoing embodiments may be all or partially implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular or plural items (pieces). For example, at least one of a, b, or c may indicate: a, b, c, a-b, a-c, b-c, or a-b-c, where a, b, and c may exist alone or in parallel.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

The units described as separate parts may or may not be physically separate, and parts displayed as units may or may not be physical units, that is, may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units may be integrated into one unit.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first information from a first node through a first network, wherein the first information comprises at least one of public land mobile network PLMN information that is of a second network and that is supported by the first node, a core network connection type that is of the second network and that is supported by the first node, a backhaul type of the first node in the second network, and a service type that is provided by a core network of the second network and that is supported by the first node; and
determining, based on the first information, whether to access the second network via the first node.

2. The method according to claim 1, wherein the method further comprises:
receiving second information from the first node, wherein the second information comprises at least one of a device type of the first node, scheduling information of the first information, an update indication of the first information, a broadcast type of the first information, a load level of the first node, a priority of the first node, and a communication domain identifier of the first node.

3. The method according to claim 2, wherein the device type of the first node comprises that the first node supports access to the second network and that the first node does not support access to the second network; and
correspondingly, the method further comprises:
receiving the first information based on the second information when the device type of the first node is that the first node supports access to the second network.

4. The method according to any one of claims 1 to 3, wherein the method for determining, based on the first information, whether to access the second network via the first node comprises one or more of the following:
determining to access the second network via the first node when a mobile communication network indicated by the PLMN information that is of the second network and that is supported by the first node is a mobile communication network supported by a terminal device;
determining to access the second network via the first node when the core network connection type that is of the second network and that is supported by the first node is consistent with a core network connection type supported by the terminal device; and
determining to access the second network via the first node when the service type that is provided by the core network of the second network and that is supported by the first node comprises a service type required by the terminal device.

5. The method according to any one of claims 1 to 4, wherein the method further comprises:
adding the first node to a service list of the terminal device when the terminal device determines to access the second network via the first node, wherein the service list is used to record a trusted grant node for the terminal device to access the second network.

6. The method according to claim 5, wherein the first information further comprises preset duration; and
correspondingly, the method further comprises:
starting or restarting a timer when the terminal device adds the first node to the service list, or when the terminal device receives scheduling information for a service or a traffic of the second network, or when the terminal device receives a service or a traffic of the second network, or when the terminal device sends a service or a traffic to the second network; and
re-obtaining the first information and/or the second information after duration of the timer exceeds the preset duration.

7. The method according to claim 5 or 6, wherein the method further comprises:
deleting, by the terminal device, the first node from the service list when the terminal device is disconnected from the second network or the terminal device does not obtain the service of the second network within the preset duration; and
releasing a resource and a quality of service QoS policy that are associated with the second network.

8. The method according to any one of claims 1 to 7, wherein the method further comprises:
sending a request message to the first node, wherein the request message is used to request the first information.

9. The method according to any one of claims 1 to 8, wherein the method further comprises:
receiving the first information and/or the second information via broadcast or unicast.

10. The method according to any one of claims 1 to 9, wherein the first network is a short-range communication network, and the second network is a cellular network or a macro coverage network.

11. A communication method, wherein the method comprises:
sending first information to a second node through a first network, wherein the first information comprises at least one of public land mobile network PLMN information that is of a second network and that is supported by a first node, a core network connection type that is of the second network and that is supported by the first node, a backhaul type of the first node in the second network, and a service type that is provided by a core network of the second network and that is supported by the first node, and the first information is used by the second node to determine whether to access the second network via the first node.

12. The method according to claim 11, wherein the method further comprises:
sending second information to the second node, wherein the second information comprises at least one of a device type of the first node, scheduling information of the first information, an update indication of the first information, a broadcast type of the first information, a load level of the first node, a priority of the first node, and a communication domain identifier of the first node, and the second information is used by the second node to determine whether to receive the first information.

13. The method according to claim 11 or 12, wherein the method further comprises:
receiving a request message from the second node, wherein the request message is used to request the first information.

14. The method according to any one of claims 11 to 13, wherein the method further comprises:
sending the first information and/or the second information to the second node via broadcast or unicast.

15. The method according to any one of claims 11 to 14, wherein the first network is a short-range communication network, and the second network is a cellular network or a macro coverage network.

16. A communication apparatus, wherein the apparatus comprises:
a receiving module, configured to receive first information from a first node through a first network, wherein the first information comprises at least one of public land mobile network PLMN information that is of a second network and that is supported by the first node, a core network connection type that is of the second network and that is supported by the first node, a backhaul type of the first node in the second network, and a service type that is provided by a core network of the second network and that is supported by the first node; and
a determining module, configured to determine, based on the first information, whether to access the second network via the first node.

17. The apparatus according to claim 16, wherein the receiving module is further configured to:
receive second information from the first node, wherein the second information comprises at least one of a device type of the first node, scheduling information of the first information, an update indication of the first information, a broadcast type of the first information, a load level of the first node, a priority of the first node, and a communication domain identifier of the first node.

18. The apparatus according to claim 17, wherein the device type of the first node comprises that the first node supports access to the second network and that the first node does not support access to the second network; and
correspondingly, the receiving module is specifically configured to:
receive the first information based on the second information when the device type of the first node is that the first node supports access to the second network.

19. The apparatus according to any one of claims 16 to 18, wherein the determining module is specifically configured to:
determine to access the second network via the first node when a mobile communication network indicated by the PLMN information that is of the second network and that is supported by the first node is a mobile communication network supported by a terminal device;
determine to access the second network via the first node when the core network connection type that is of the second network and that is supported by the first node is consistent with a core network connection type supported by the terminal device; and
determine to access the second network via the first node when the service type that is provided by the core network of the second network and that is supported by the first node comprises a service type required by the terminal device.

20. The apparatus according to any one of claims 16 to 19, wherein the apparatus further comprises a maintenance module, and the maintenance module is configured to:
add the first node to a service list of the terminal device when the terminal device determines to access the second network via the first node, wherein the service list is used to record a trusted grant node for the terminal device to access the second network.

21. The apparatus according to claim 20, wherein the first information further comprises preset duration; and
correspondingly, the maintenance module is further configured to:
start or restart a timer when the terminal device adds the first node to the service list, or when the terminal device receives scheduling information for a service or a traffic of the second network, or when the terminal device receives a service or a traffic of the second network, or when the terminal device sends a service or a traffic to the second network; and
re-obtain the first information and/or the second information after duration of the timer exceeds the preset duration.

22. The apparatus according to claim 20 or 21, wherein the maintenance module is further configured to:
delete, by the terminal device, the first node from the service list when the terminal device is disconnected from the second network or the terminal device does not obtain the service of the second network within the preset duration; and
release a resource and a quality of service QoS policy that are associated with the second network.

23. The apparatus according to any one of claims 16 to 22, wherein the apparatus further comprises a sending module, and the sending module is configured to:
send a request message to the first node, wherein the request message is used to request the first information.

24. The apparatus according to any one of claims 16 to 23, wherein the receiving module is specifically configured to:
receive the first information and/or the second information via broadcast or unicast.

25. The apparatus according to any one of claims 16 to 24, wherein the first network is a short-range communication network, and the second network is a cellular network or a macro coverage network.

26. A communication apparatus, wherein the apparatus comprises:
a sending module, configured to send first information to a second node through a first network, wherein the first information comprises at least one of public land mobile network PLMN information that is of a second network and that is supported by a first node, a core network connection type that is of the second network and that is supported by the first node, a backhaul type of the first node in the second network, and a service type that is provided by a core network of the second network and that is supported by the first node, and the first information is used by the second node to determine whether to access the second network via the first node.

27. The apparatus according to claim 26, wherein the sending module is further configured to:
send second information to the second node, wherein the second information comprises at least one of a device type of the first node, scheduling information of the first information, an update indication of the first information, a broadcast type of the first information, a load level of the first node, a priority of the first node, and a communication domain identifier of the first node, and the second information is used by the second node to determine whether to receive the first information.

28. The apparatus according to claim 26 or 27, wherein the apparatus further comprises a receiving module, and the receiving module is configured to:
receive a request message from the second node, wherein the request message is used to request the first information.

29. The apparatus according to any one of claims 26 to 28, wherein the sending module is specifically configured to:
send the first information and/or the second information to the second node via broadcast or unicast.

30. The apparatus according to any one of claims 26 to 29, wherein the first network is a short-range communication network, and the second network is a cellular network or a macro coverage network.

31. A communication apparatus, comprising a memory and a processor, wherein
the memory is configured to store program instructions; and
the processor is configured to invoke the program instructions in the memory to perform the method according to any one of claims 1 to 10 or the method according to any one of claims 11 to 15.

32. A chip, comprising at least one processor and a communication interface, wherein the communication interface and the at least one processor are interconnected by using a line, and the at least one processor is configured to run a computer program or instructions, to perform the method according to any one of claims 1 to 10 or the method according to any one of claims 11 to 15.

33. A computer-readable medium, wherein the computer-readable medium stores program code for computer execution, and the program code comprises instructions for performing the method according to any one of claims 1 to 10 or the method according to any one of claims 11 to 15.
